# EUROPEAN PATENT SPECIFICATION

(11) **EP 2 452 569 B1**
(45) Date of publication and mention of the grant of the patent: **21.09.2016**
(21) Application number: 11188827.7
(22) Date of filing: 11.11.2011
(51) Int. Cl.: A23P 10/20, A23L 7/117, A23G 3/54

(54) **A food product based on cereal grains including a filling**
Lebensmittelprodukt basierend auf Getreidekörnern mit einer Füllung
Produit alimentaire basé sur des grains de céréales incluant un remplissage

(30) Priority: 12.11.2010 IT TO20100900
(43) Date of publication of application: 16.05.2012
(73) Proprietor: Soremartec S.A., 2632 Findel (LU); Ferrero S.p.A., 12051 Alba (Cuneo) (IT)
(72) Inventor: SCAVINO, Mario, I-12060 GRINZANE CAVOUR (Cuneo) (IT)
(74) Representative: Rambelli, Paolo

(56) References cited:
- WO-A2-2005/025326
- GB-A- 2 393 097
- US-A1- 2003 157 223
- US-A1- 2006 045 937

## Description

The present invention relates to a food product of the cereal bar type, formed by an agglomeration of cereal grains.

These bars are well known in the food industry and are appreciated by consumers owing to their organoleptic and nutritional characteristics.

The bars typically comprise puffed cereal grains of various kinds, crunchy puffed rice grains and, optionally, inclusions such as pieces of fruit, nuts or the like and in some cases also pieces of chocolate, which are held together by means of a syrup that acts as a binder.

The binding syrup is typically an aqueous solution of sugars such as maize syrup or glucose or fructose syrup.

The use of binding syrups containing a sugary syrup and polyols such as glycerine and sorbitol is also known from US 4 451 488.

A typical process for the production of granular bars of the above-mentioned type comprises the mixing of the ingredients comprising cereal grains, puffed rice, and optional inclusions with the binding syrup in a continuous mixer at a temperature typically of between ambient temperature and about 55°C.

After mixing, the mixture is transferred to a conveyor and compressed into the form of a mat by means of rollers and is then cut into bars by means of a cutter. The water content of the final product is of the order of about 6% or more; the bar generally has a "chewy" or plastic and malleable consistency with outer surfaces which are generally sticky because of the water content of the sugary syrup.

Extrusion production processes are also known.

WO2005/025326 describes the production of a granular bar by a process which provides for the mixing of anhydrous cereal grains with a binding syrup, with the addition of water, to give a moist mixture which is allowed to rest for at least one hour, and subsequent extrusion of the mixture in a low pressure extruder; after the extruded mixture has been cut into pieces, the pieces may be subjected to drying to give a crunchy structure.

In one embodiment, the production of a filled granular bar by means of a co-extrusion method is envisaged; however, this process applies only to the production of a bar of plastic and chewy consistency.

The object of the present invention is to provide a granular product which is formed by an agglomeration of puffed cereal grains or the like, which has a crunchy structure, and which includes a filling, in particular a filling of creamy and soft consistency that is present in sufficient quantity to counteract the fibrous and hard to swallow structure of the granular product to form a crunchy cereal snack that is easy to swallow and rich in flavour.

Another object of the invention is to provide a granular product of the above-mentioned type which has a good quantity of filling, no less than 10% by weight of the finished product, and which does not have an adhesive and sticky outer surface and can therefore be eaten easily, even in warm environments, without risk of soiling.

In view of these objects, the subject of the invention is a food product having the features defined in the appended claims.

A further subject of the invention is a process for the production of the granular product as defined in the appended claims.

The dependent claims, which constitute an integral part of this description, define preferred features of the food product and of the process.

Further features and advantages of the product and of the process according to the invention will become clear from the following detailed description, which is given with reference to the appended drawings, which are provided by way of non-limiting example and in which:
- Figure 1 is a perspective view of the food product according to the invention;
- Figures 2A and 2B are perspective views which illustrate component parts of the product of Figure 1;
- Figure 3 is a section taken in the plane III-IV of Figure 1; and
- Figures 4A and 4B, which should be read in sequence, are schematic representations which illustrate the operative steps for the production of the food product.

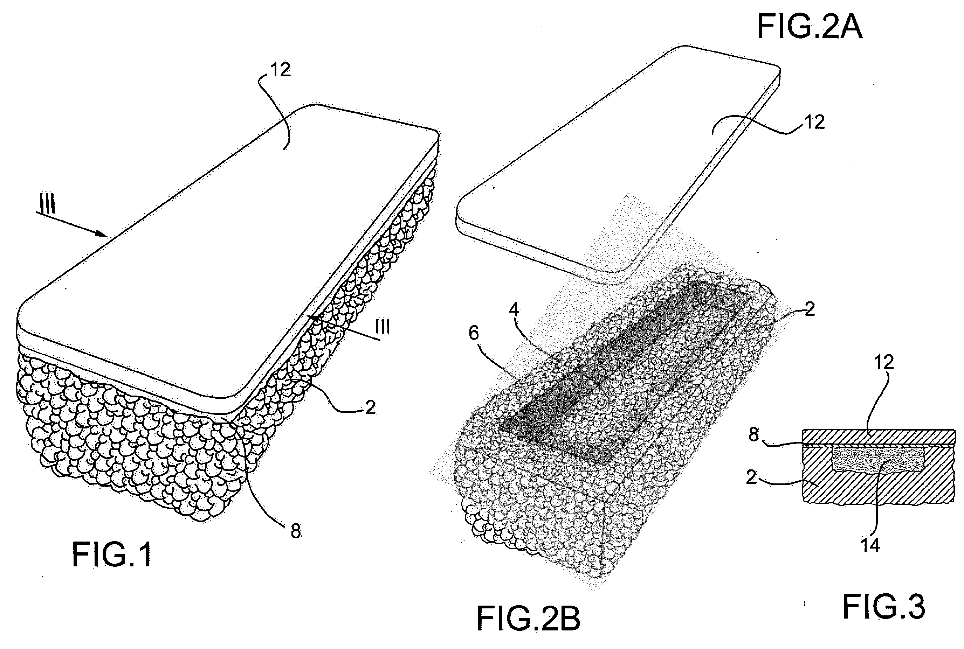

The food product shown in Figure 1 is preferably in the form of a parallelepipedal bar; this shape is preferred since, in industrial production, it minimizes waste; however, it is intended that the structural characteristics of the product which are described below may be incorporated in products of different shapes.

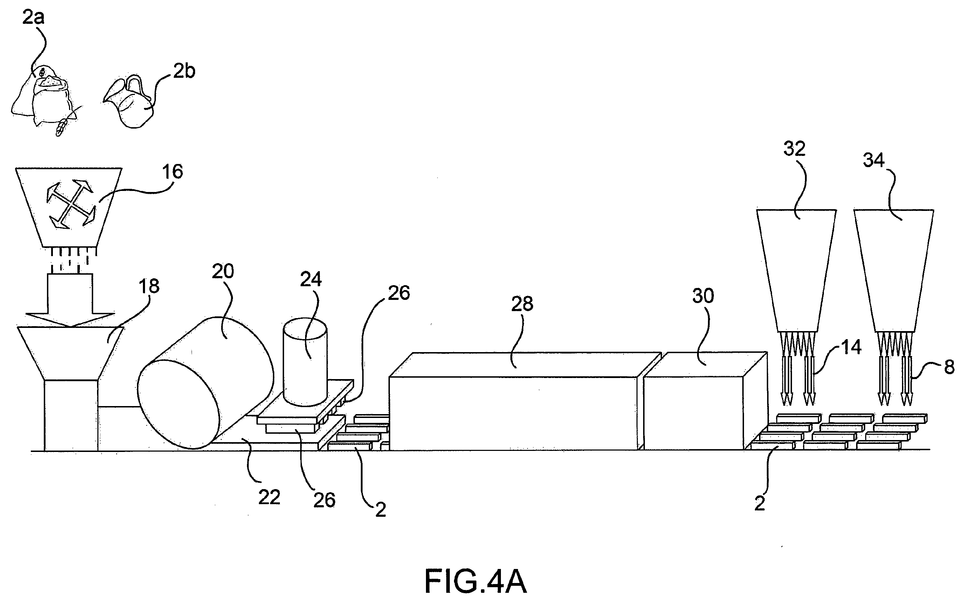

The product comprises a shaped housing body 2 comprising an agglomeration of cereal granules or particles, aggregated and held together by means of a food binding agent 2b (Figure 4A). Puffed granules of cereals selected from barley, wheat, spelt, whole wheat, buckwheat, oats, rice and mixtures of two or more of these are preferably used and are preferably substantially anhydrous; the agglomeration may also comprise granular inclusions of dried or dehydrated fruits such as, for example, raisin bits or chopped nuts such as walnuts, hazelnuts and almonds. These granules preferably have a maximum size of between 1.4 mm and 2.5 mm.

The food binding agent 2b is preferably an aqueous solution including sugars such as, in particular, sucrose, glucose, fructose and dextrose. Solutions having a water content of about 20-40% by weight, preferably from 25% to 35% by weight and correspondingly a content of the above-mentioned sugars of from 80% to 60% by weight, preferably from 75% to 65% by weight, are preferred.

The use of solutions in which sucrose constitutes the predominant sugar relative to the other sugars, particularly aqueous solutions containing from 85% to 98% by weight of sucrose with reference to 100 parts by weight of total sugars is also preferred.

A suitable binding agent solution according to the invention can be obtained by dissolving sucrose in water and adding small quantities (for example, from 2% to 8% by weight) of a glucose or glucose-fructose syrup to give an aqueous solution having the above-mentioned water and sugar concentrations.

The mixture of granules used may also contain food fibres, for example, inulin, fructooligosaccharides and galacto-oligosaccharides.

The binding agent 2b is preferably mixed with the granular mixture (optionally including the above-mentioned fibres) in a ratio by weight of binding agent to solid granules and any fibres of between 0.3 and 0.5, more preferably between 0.35 and 0.45.

As shown in Figures 2B and 3, the granular body 2 is shaped so as to have a recess 4 suitable for housing a substantially anhydrous edible filling mass 14. The recess 4 is surrounded by an annular surface 6 which is substantially flat, naturally apart from its porous and granular structure.

A substantially anhydrous edible filling mass 14 of creamy consistency is placed in the recess 4.

The term "substantially anhydrous" as used in the present description means, in general, a water content not exceeding 2% by weight and preferably less than 1% by weight.

The filling mass 14 may be, for example, a cream containing fats and vegetable oils, for example, in quantities of from 30% to 50% by weight, milk powder, sugars and a fruit or nut paste, for example, hazelnut paste, together with optional emulsifiers and flavourings such as, for example, a cream of the type marketed under the trade mark NUTELLA®.

The cream used has a fluid, spooning consistency throughout the temperature range of between 20°C and 30°C. The filling mass housed in the recess 4 constitutes at least 10% by weight, preferably from 10% to 20% by weight of the finished product.

The food product further comprises a thin layer 8 of substantially anhydrous, edible material which has a melting point higher than that of the edible filling mass and which is deposited to cover the filling mass 14 and the annular surface 6 which surrounds the recess 4 in which the filling mass 14 is housed.

This layer 8 of edible material acts, on the one hand, as a sealing layer to prevent the filling mass 14 possibly coming out of the recess in which it is housed and, on the other hand, as a cementing layer for anchoring a thin slab 12 of solid, edible material to the food product.

By way of example, the layer 8 may be constituted by an edible composition comprising vegetable fats in amounts of from 20% to 30% by weight, cow's butter in amounts of from 5% to 12% by weight, milk powder in amounts of from 25% to 35% by weight, and sucrose in amounts of about 30% to 40% by weight. The edible mass forming the layer 8 maintains a solid or semi-solid consistency at temperatures of between 20°C and 30°C so as to be able to perform a sealing function with respect to the filling mass 14 and, at the same time, a cementing function with respect to the covering slab 12 which will be applied in the subsequent steps.

The slab 12 may be, for example, a slab of chocolate or even a slab of another edible material such as wafer, dried fruit or nuts, or a granular slab formed by cereal grains held together by means of a binder, or possibly a slab of such edible materials coated with chocolate or the like.

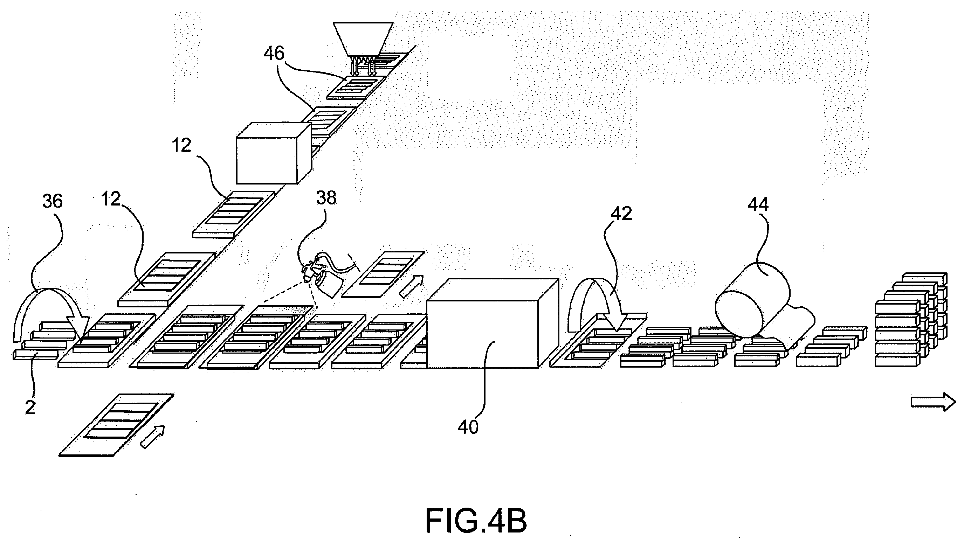

Figures 4A and 4B show, in sequence, operative steps exemplifying the production of the food product.

The ingredients which are intended to form the granular body 2, that is, in the case in question, a mixture of cereals 2a optionally including inclusions as described above, and a solution of the binding agent 2b are initially mixed in a rotary mixer provided with a stirrer 16 until a homogeneous distribution of the binding agent 2b is achieved; typically, the mixing is performed at ambient temperature or at a temperature of between ambient temperature and about 50°C, that is, at a temperature and for periods of time such as not to cause the removal of water by evaporation from the mass being mixed.

It is in fact preferable to perform the mixing in a manner such as to keep the water content substantially constant during this operation.

The mixed granular mass is then transferred into a hopper 18 and is supplied thereby to a roller 20 which brings about the formation of a strip or layer 22 of granular mass having a predetermined uniform thickness. The edible body 2 is formed by means of a tool with a pressure pad 24, or rather comprising a plurality of pressure pads 26 which are shaped in accordance with the recess 4 to be produced in the body 2. In an alternative embodiment, the plurality of pressure pads 26 may be located in a rotary roller and driven by systems known in the art.

The same pressure-pad tool 24 may be able to cut the strip 22 into individual bars by means of cutting tools (not shown).

The pads 26 exert a pressure on the layer 22 so as to produce recesses 4 the depth of which may be about 40-60% of the thickness of the layer 22. The shaped bodies 2 thus obtained are then supplied by means of a conveyor to a drying oven or tunnel 28 where they are subjected to heating to a maximum temperature not exceeding about 110°C, for periods of time such as to achieve dehydration of the binding agent solution as a result of evaporation of the water, to a moisture content in the bodies 2 preferably not exceeding 2% by weight and more preferably less than 1.5% by weight. This methodology gives the agglomeration a stable structure which is not plastically deformable.

As a result of the evaporation of the water, the granules have, on their interface surfaces with the adjacent granules, a thin sugary layer in crystalline form constituted substantially by sucrose and, optionally, small quantities of the other sugars mentioned above, particularly fructose and glucose.

The dehydration operation is such as not to cause a substantial change in the organoleptic characteristics of the granules; the structure thus obtained is in the form of a crunchy structure with cohesive granules which is not liable to disintegrate as a result of mechanical handling or due to immersion in water.

The products coming out of the baking/dehydration oven are then supplied to a cooling tunnel 30 where they are cooled to a temperature close to ambient temperature.

After cooling, the bodies 2 are supplied to a dosing device 32 which is arranged to dispense a creamy filling mass 14 as described above into the recess 4. A dosing device 34 is then used to deposit on the filling mass 14 and on the annular wall 6 which surrounds the filling mass 14, a thin layer 8 formed by an edible mass which, as indicated, has a higher melting point than the filling mass 14.

Figure 4B shows, as a first step, the application of the slab 12 to the sealing layer 8. The slabs 12 may be produced by moulding in moulds 46 in a separate line and may be supplied therefrom to a station 36 for connection to the filled bodies 2. For this purpose, the bodies 2 are turned over through 180° in the station 36 and are positioned on the slabs 12 coming from the secondary moulding line. In an alternative embodiment, the slabs 12 may be removed from the moulds 46 and then fitted on top of the filled bodies 2 with the use of systems known in the art.

An optional spraying step 38 follows, in which the lower surfaces of the shaped bodies 2, that is, the surfaces remote from the slabs 12, are provided with a spray coating, for example, with a composition of chocolate or the like.

When a coating layer is applied, a step 40 of cooling in controlled dehumidification conditions may then be performed, followed by the final demoulding step 42 and packaging step 44, typically in flow-pack-type packages.

The invention thus provides a crunchy, fibre-rich, granular food product having a core formed by a soft and creamy filling mass that makes the product easy to swallow and is completely confined within the structure of the product which has non-sticky outer surfaces, facilitating its handling.

## Claims

1. A food product including:
- a shaped housing body (2) formed by an agglomeration containing cereal grains held together by a food binding agent (2b), **characterised in that** the shaped body (2) has at least one housing recess (4) surrounded by an annular surface (6) and has a moisture content not exceeding 2% by weight, and **in that** the shaped body (2) includes a substantially anhydrous, edible, creamy filling mass (14) housed in the recess (4);
- a covering layer of substantially anhydrous edible material (8) having a melting point higher than that of the edible filling mass (14) being deposited to cover the filling mass (14) and the annular surface (6), and
- a flat slab (12) of edible material being stuck to the covering layer.

2. A food product according to claim 1, **characterised in that** the grains forming the shaped housing body (2) are stuck together by means of a coating at the interface between the grains, the coating consisting of crystallised sugars and resulting from the dehydration of an aqueous solution containing the sugars.

3. A food product according to claim 1 or claim 2, **characterised in that** the crystallised sugar coating consists primarily of sucrose.

4. A food product according to claim 3, **characterised in that** the sugar coating comprises from 85% to 98% of sucrose, the remainder being made up mainly of glucose and fructose.

5. A food product according to any one of claims 1 to 4, **characterised in that** the grains forming the agglomeration have a maximum size between 1.4 mm and 2.5 mm.

6. A food product according to any one of claims 1 to 5, **characterised in that** the body (2) consists of a mixture of puffed cereal grains, optionally including inclusions comprising dried or dehydrated fruit or nuts in granular form, and edible fibres.

7. A food product according to any one of claims 1 to 6, **characterised in that** the filling mass (14) includes a content of fats and vegetable oils of between 30% and 50% by weight.

8. A food product according to any one of claims 1 to 7, **characterised in that** the covering layer (8) maintains a substantially solid consistency throughout the temperature range of between 20°C and 30°C.

9. A food product according to any one of the preceding claims, **characterised in that** the slab (12) is a moulded slab of chocolate.

10. A food product according to any one of the preceding claims, **characterised in that** the filling mass (14) constitutes from 10% to 20% by weight of the finished product.

11. A process for the production of a granular food product according to any one of claims 1 to 10, **characterised in that** it comprises the steps of:
- mixing a granular mass (2a) including cereals with a food binding agent (2b) including an aqueous solution comprising sugars in an amount of from 80% to 60% by weight, preferably from 75% to 65% and water in an amount of from 20% to 40% by weight, preferably from 25% to 35%;
- subjecting the food mass mixed with the binding agent (2b) to forming, with the use of a pressure pad (24), to obtain a shaped body (2) having a recess (4) suitable for receiving a filling mass (14), and
- heating the shaped body (2) to a temperature not exceeding 110°C until a moisture content not exceeding 2% by weight, preferably less than 1.5% by weight, is reached.

12. A process according to claim 11, **characterised in that** it further comprises the steps of:
- depositing a substantially anhydrous creamy filling mass (14) in the recess (4);
- depositing a layer of substantially anhydrous food material (8) to cover the filling mass (14) so as to seal the creamy filling mass (14) inside the recess (4), and
- applying a slab (12) of substantially solid food material by adhesion to the covering layer (8).

13. A process according to claim 11 or claim 12, **characterised in that** the binding agent (2b) is mixed with the granular mass (2a) in a ratio by weight of between 0.3 and 0.5, preferably between 0.35 and 0.45.

14. A process according to any one of claims 11 to 13, **characterised in that** the aqueous solution of the binding agent (2b) is formed by a mixture of sugars including sucrose, fructose and dextrose.

15. A process according to claim 14, **characterised in that** the mixture of sugars includes at least from 85% to 98% of sucrose, the balance to 100% including glucose and fructose.

## Patentansprüche

1. Nahrungsmittelprodukt, umfassend:
- einen geformten Gehäusekörper (2), gebildet durch eine Agglomeration, die Cerealienkörner enthält, welche durch ein Nahrungsmittel-Bindemittel (2b) zusammengehalten werden, **dadurch gekennzeichnet, dass** der geformte Körper (2) mindestens eine Gehäusevertiefung (4) aufweist, die von einer kranzförmigen Oberfläche (6) umgeben ist, und dass er einen Feuchtigkeitsgehalt aufweist, der 2 Gew.% nicht überschreitet, und dadurch, dass der geformte Körper (2) eine im Wesentlichen wasserfreie, essbare, cremige Füllmasse (14) enthält, die in der Vertiefung (4) untergebracht ist;
- eine Deckschicht aus einem im Wesentlichen wasserfreien, essbaren Material (8) mit einem Schmelzpunkt, der höher ist als derjenige der essbaren Füllmasse (14), die so abgelagert ist, dass sie die Füllmasse (14) und die kranzförmige Oberfläche (6) bedeckt, und
- eine flache Platte (12) aus essbarem Material, das an die Deckschicht angebracht ist.

2. Nahrungsmittelprodukt gemäß Anspruch 1, **dadurch gekennzeichnet, dass** die Körner, die den geformten Gehäusekörper (2) bilden, mittels einer Beschichtung an einer Grenzfläche zwischen den Körnern zusammengehalten werden, wobei die Beschichtung aus kristallisierten Zuckern besteht und aus der Entwässerung einer wässrigen Lösung, die die Zucker enthält, resultiert.

3. Nahrungsmittelprodukt gemäß Anspruch 1 oder Anspruch 2, **dadurch gekennzeichnet, dass** die kristallisierte Zuckerbeschichtung hauptsächlich aus Sucrose besteht.

4. Nahrungsmittelprodukt gemäß Anspruch 3, **dadurch gekennzeichnet, dass** die Zuckerbeschichtung von 85 % bis 98 % Sucrose umfasst, wobei der Rest hauptsächlich aus Glukose und Fruktose besteht.

5. Nahrungsmittelprodukt gemäß irgendeinem der Ansprüche 1 bis 4, **dadurch gekennzeichnet, dass** die Körner, die die Agglomeration bilden, eine Maximalgröße zwischen 1,4 mm und 2,5 mm aufweisen.

6. Nahrungsmittelprodukt gemäß irgendeinem der Ansprüche 1 bis 5, **dadurch gekennzeichnet, dass** der Körper (2) aus einer Mischung aus aufgedunsenen Cerealienkörnern besteht, die optional Einschlüsse enthält, umfassend getrocknete oder entwässerte Früchte oder Nüsse in granularer Form, und essbare Fasern.

7. Nahrungsmittelprodukt gemäß irgendeinem der Ansprüche 1 bis 6, **dadurch gekennzeichnet, dass** die Füllmasse (14) einen Gehalt an Fetten und Pflanzenöl von zwischen 30 Gew.% und 50 Gew.% enthält.

8. Nahrungsmittelprodukt gemäß irgendeinem der Ansprüche 1 bis 7, **dadurch gekennzeichnet, dass** die Deckschicht (8) im Temperaturbereich zwischen 20°C und 30°C eine im Wesentlichen feste Konsistenz beibehält.

9. Nahrungsmittelprodukt gemäß irgendeinem der vorhergehenden Ansprüche, **dadurch gekennzeichnet, dass** die Platte (12) eine Formplatte aus Schokolade ist.

10. Nahrungsmittelprodukt gemäß irgendeinem der vorhergehenden Ansprüche, **dadurch gekennzeichnet, dass** die Füllmasse (14) 10 Gew.% bis 20 Gew.% des fertiggestellten Produkts ausmacht.

11. Verfahren zur Herstellung eines granularen Nahrungsmittelprodukts gemäß irgendeinem der Ansprüche 1 bis 10, **dadurch gekennzeichnet, dass** es die Schritte umfasst:
- Mischen einer granularen Masse (2a), die Cerealien enthält, mit einem Nahrungsmittel-Bindemittel (2b), das eine wässrige Lösung enthält, die Zucker in einer Menge von 80 Gew.% bis 60 Gew.%, bevorzugt 75 % bis 65 %, und Wasser in einer Menge von 20 Gew.% bis 40 Gew.%, bevorzugt 25 % bis 35 %, umfasst;
- Unterziehen der mit dem Bindemittel (2b) gemischten Nahrungsmittelmasse unter einen Formprozess, wobei eine Druckplatte (24) verwendet wird, um einen geformten Körper (2) mit einer Vertiefung (4) zu erhalten, der zur Aufnahme einer Füllmasse (14) geeignet ist, und
- erwärmen des geformten Körpers (2) auf eine Temperatur, die 110°C nicht überschreitet, bis ein Feuchtigkeitsgehalt erreicht wird, der 2 Gew.% nicht überschreitet, bevorzugt weniger als 1,5 Gew.%.

12. Verfahren gemäß Anspruch 11, **dadurch gekennzeichnet, dass** es ferner die Schritte umfasst:
- Ablagern einer im Wesentlichen wasserfreien cremigen Füllmasse (14) in der Vertiefung (4);
- Ablagern einer Schicht eines im Wesentlichen wasserfreien Nahrungsmittelmaterials (8), um die Füllmasse (14) zu bedecken, um so die cremige Füllmasse (14) innerhalb der Vertiefung (4) abzudichten und
- Einbringen einer Platte (12) aus einem im Wesentlichen festen Nahrungsmittelmaterial durch Adhäsion an die Deckschicht (8).

13. Verfahren gemäß Anspruch 11 oder Anspruch 12, **dadurch gekennzeichnet, dass** das Bindemittel (2b) mit der granularen Masse (2a) in einem Gewichtsverhältnis zwischen 0,3 und 0,5, bevorzugt zwischen 0,35 und 0,45, gemischt wird.

14. Verfahren gemäß irgendeinem der Ansprüche 11 bis 13, **dadurch gekennzeichnet, dass** die wässrige Lösung des Bindemittels (2b) aus einer Mischung von Zuckern gebildet wird, die Sucrose, Fruktose und Dextrose umfasst.

15. verfahren gemäß Anspruch 14, **dadurch gekennzeichnet, dass** die Mischung von Zuckern mindestens 85 % bis 98 % Sucrose umfasst, wobei der Rest bis auf 100 % Glukose und Fruktose enthält.

## Revendications

1. Produit alimentaire comprenant :
un corps de logement façonné (2) formé par une agglomération contenant des grains de céréales maintenus ensemble par un agent liant alimentaire (2b), **caractérisé en ce que** le corps façonné (2) comporte au moins une cavité de logement (4) entourée par une surface annulaire (6) et présente une teneur en humidité ne dépassant pas 2 % en poids, et **en ce que** le corps façonné (2) comprend une masse de remplissage crémeuse, comestible, sensiblement anhydre (14) contenue dans la cavité (4) ;
une couche de couverture de matière comestible sensiblement anhydre (8) ayant un point de fusion plus élevé que celui de la masse de remplissage comestible (14) qui est déposée pour recouvrir la masse de remplissage (14) et la surface annulaire (6), et
une tablette plate (12) de matière comestible qui est collée sur la couche de couverture.

2. Produit alimentaire selon la revendication 1, **caractérisé en ce que** les grains formant le corps de logement façonné (2) sont collés ensemble au moyen d'un enrobage à l'interface entre les grains, l'enrobage étant constitué de sucres cristallisés et résultant de la déshydratation d'une solution aqueuse contenant les sucres.

3. Produit alimentaire selon la revendication 1 ou 2, **caractérisé en ce que** l'enrobage de sucres cristallisés est principalement constitué de saccharose.

4. Produit alimentaire selon la revendication 3, **caractérisé en ce que** l'enrobage de sucres comprend de 85 % à 98 % de saccharose, le reste étant principalement constitué de glucose et de fructose.

5. Produit alimentaire selon l'une quelconque des revendications 1 à 4, **caractérisé en ce que** les grains formant l'agglomération ont une taille maximale comprise entre 1,4 mm et 2,5 mm.

6. Produit alimentaire selon l'une quelconque des revendications 1 à 5, **caractérisé en ce que** le corps (2) est constitué d'un mélange de grains de céréales soufflés, comprenant éventuellement des inclusions constituées de fruits ou de noix séchés ou déshydratés sous une forme granulaire, et de fibres comestibles.

7. Produit alimentaire selon l'une quelconque des revendications 1 à 6, **caractérisé en ce que** la masse de remplissage (14) présente une teneur en graisses et huiles végétales comprise entre 30 % et 50 % en poids.

8. Produit alimentaire selon l'une quelconque des revendications 1 à 7, **caractérisé en ce que** la couche de couverture (8) maintient une consistance sensiblement solide tout au long de la plage de températures comprise entre 20 °C et 30 °C.

9. Produit alimentaire selon l'une quelconque des revendications précédentes, **caractérisé en ce que** la tablette (12) est une tablette moulée de chocolat.

10. Produit alimentaire selon l'une quelconque des revendications précédentes, **caractérisé en ce que** la masse de remplissage (14) constitue de 10 % à 20 % en poids du produit fini.

11. Procédé de production d'un produit alimentaire granulaire selon l'une quelconque des revendications 1 à 10, **caractérisé en ce qu'**il comprend les étapes suivantes :
mélange d'une masse granulaire (2a) comprenant des céréales avec un agent liant alimentaire (2b) comprenant une solution aqueuse contenant des sucres dans une quantité allant de 80 % à 60 % en poids, de préférence de 75 % à 65 % et de l'eau dans une quantité allant de 20 % à 40 % en poids, de préférence de 25 % à 35 % ;
soumission de la masse alimentaire mélangée avec l'agent liant (2b) à la formation, à l'aide d'un tampon de pression (24), pour obtenir un corps façonné (2) comportant une cavité (4) adaptée à la réception d'une masse de remplissage (14), et
chauffage du corps façonné (2) à une température ne dépassant pas 110 °C jusqu'à ce qu'une teneur en humidité ne dépassant pas 2 % en poids, de préférence inférieure à 1,5 % en poids, soit atteinte.

12. Procédé selon la revendication 11, **caractérisé en ce qu'**il comprend en outre les étapes suivantes :
dépôt d'une masse de remplissage crémeuse sensiblement anhydre (14) dans la cavité (4) ;
dépôt d'une couche de matière alimentaire sensiblement anhydre (8) pour recouvrir la masse de remplissage (14) de manière à sceller la masse de remplissage crémeuse (14) à l'intérieur de la cavité (4), et
application d'une tablette (12) de matière alimentaire sensiblement solide par adhérence à la couche de couverture (8).

13. Procédé selon la revendication 11 ou 12, **caractérisé en ce que** l'agent liant (2b) est mélangé avec la masse granulaire (2a) dans un rapport en poids compris entre 0,3 et 0,5, de préférence entre 0,35 et 0,45.

14. Procédé selon l'une quelconque des revendications 11 à 13, **caractérisé en ce que** la solution aqueuse de l'agent liant (2b) est formée par un mélange de sucres comprenant du saccharose, du fructose et du dextrose.

15. Procédé selon la revendication 14, **caractérisé en ce que** le mélange de sucres comprend au moins de 85 % à 98 % de saccharose, le reste jusqu'à 100 % comprenant du glucose et du fructose.
